# EUROPEAN PATENT APPLICATION

(11) **EP 2 172 895 A1**
(43) Date of publication of application: **07.04.2010**
(21) Application number: 08017383.4
(22) Date of filing: 02.10.2008
(51) Int. Cl.: G06Q 30/00, G10L 17/00

(54) **Providing information within the scope of a voice communication connection**

(71) Applicant: Vodafone Holding GmbH, 40213 Düsseldorf (DE)
(72) Inventor: Lee, Sabrina, 40219 Düsseldorf (DE); Hartl, Mike, 40878 Ratingen (DE)
(74) Representative: Ring & Weisbrodt

(57) **Abstract**

The present invention relates to a method for providing information (9), in particular service information and/or advertising information for goods and/or services by means of a terminal (2) to be operated in a communication network (5), wherein information is acoustically signalised by the terminal within the scope of a voice communication connection (11, 12), which method is characterized by the following process steps:
- detection of at least a part of the voice of the user (1) of a terminal (2) within the scope of a voice communication connection (11, 12);
- analysis of the detected voice of the user (1) with respect to phonetic parameters;
- evaluation of the analysed phonetic parameters and
- signalisation of information dependent on the evaluation of the analysed phonetic parameters of the detected voice of the user (1).

Furthermore, the present invention relates to a network node in a communication network (5), preferably a mobile network (5) according to a GSM, GPRS and/or UMTS radio network standard, which node is at least partially involved in a voice communication connection (11, 12) and is designed and/or adapted to at least partially carry out a method according to the invention.

Furthermore, another subject of the present invention is a terminal (2) to be operated in a communication network (5), preferably a mobile network (5) according to a GSM, GPRS and/or UMTS radio network standard, which terminal is designed and/or adapted to at least partially carry out a method according to the invention.

## Description

The present invention relates to a method for providing information, in particular service information and/or advertising information for goods and/or services by means of a terminal to be operated in a communication network, wherein information is acoustically signalised by the terminal within the scope of a voice communication connection.

Furthermore, the present invention relates to a network node in a communication network, preferably a mobile network according to a GSM, GPRS and/or UMTS radio network standard, which node takes at least partially part in a voice communication connection and is designed and/or adapted to at least partially carry out a method according to the invention.

Furthermore, another subject of the present invention is a terminal to be operated in a communication network, preferably a mobile network according to a GSM, GPRS and/or UMTS radio network standard, which terminal is designed and/or adapted to at least partially carry out a method according to the invention.

In the state of the art different methods, systems and devices for providing information within the scope of a voice communication connection between the user of a communication terminal and another subscriber are known, for example from DE 102 17 591 A1. Corresponding methods are in parrticular used for inserting advertising information into the voice communication connection for the persons involved in the voice communication connection.

Corresponding adversting information is often offered to users of communication terminals during unfavourable or inappropriate conditions or occasions. The sustainability and the efficiency of corresponding information and/or the succes that can be obtained with it are small, in particular as the user is often not in the right mood to react positively or in a relaxed manner to corresponding information in corresponding conditions or on corresponding occasions. Therefore, users usually feel corresponding information to be disturbing.

Based upon this state of the art, it is the object of the invention to improve the providing of information within the scope of a voice communication connection, in particular with respect to the sustainability and the efficiency of corresponding information and/or the success that can be obtained with it.

As a technical solution, the invention proposes a method for providing information, in particular service information and/or advertising information for goods and/or services by means of a terminal to be operated in a communication network, wherein information is acoustically signalised by the terminal within the scope of a voice communication connection, which method is characterized by the following process steps:
- detection of at least a part of the voice of the user of a terminal within the scope of a voice communication connection;
- analysis of the detected voice of the user with respect to phonetic parameters;
- evaluation of the analysed phonetic parameters and
- signalisation of information dependent on the evaluation of the analysed phonetic parameters of the detected voice of the user.

The invention is based upon the knowledge that the providing of information within the scope of a voice communication connection can be improved in particular with respect to the sustainability and the efficiency of corresponding information and/or the success that can be obtained with it, if information is signalised dependent on phonetic parameters of the user. According to the invention, it is made use of the fact that based upon phonetic parameters of the voice of a user, one can draw conclusions about the user's emotional condition and/or conclusions about the user's state of health. The consideration of the user's emotional condition and/or the user's state of health enables to supply the user with information, in particular service information and/or advertising information, in a more calculated manner and in a way that considers more the user's condition. As a result, one can obtain improvements with respect to the sustainability and the efficiency of corresponding information and/or the success that can be obtained with it, in particular since the user will then feel corresponding information to be less inconvenient, because it better harmonizes with his condition.

Advantageously, the analysis is realized with respect to parameters such as voice frequency, voive tone, voice ring, articulation and/or prosodic parameters.

In another embodiment of the invention, the analysed phonetic parameters are evaluated with respect to the user's emotional condition and/or the user's state of health. Herein the invention makes in particualr use of the knowledge that a so called voice frequency analysis allows to not only determine information that indicates emotional conditions, such as for example anger, fear, stress and/or the like, but also information that indicates states of health, such as for example lacks of vitamines and/or nutrients, poisonings and/or the like.

Another advantageous embodiment of the invention provides that the information to be signalised is adapted to the user's emotional condition and/or the user's state of health. According to the invention, there is thus quasi a filtering of the information to be signalised, by means of which another improvement of the providing of information can be obtained.

According to another advantageous embodiment of the invention, the user's voice is detected within the scope of the voice communication connection by means of the user's terminal and/or by means of a device (computing unit) of a network node of the communication network that is involved in the voice communication connection. Another advantageous embodiment of the invention is **characterized in that** the analysis of the detected user's voice is realized by means of the user's terminal and/or by means of a device (computing unit) of a network node of the communication network, which node is involved in the voice communication connection. A detection of the user's voice according to the invention by means of the user's terminal is advantageously realized simultaneously and in parallel with the voice communication connection. The detected voice of the user will then be analysed by either the terminal itself, for which purpose the terminal is provided with a corresponding analysing unit, or the detected voice of the user will be transmitted to a network node of the communication network, which node is involved in the voice communication connection, and will be analysed there by a corresponding analysing unit. The analysed voice will then be either evaluated by the user's terminal, for which purpose the terminal is provided with a corresponding evaluation unit, and the result of the evaluation will be transmitted to a network node of the communication network, which node is involved in the voice communication connection, or the evaluation will be realized by the network node of the communication network itself, which node is involved in the voice communication connection, by means of an evaluation unit that is provided there.

An especially preferred embodiment of the invention is **characterized in that** the user's voice is digitalised in the context of the detection, the digital voice signal is processed with a Fourier transformation within the scope of the analysis and at least one comparison between the frequency spectrum of the Fourier transformation of the digital voice signal of the detected voive of the user and frequency spectra of a Fourier transformation of reference voices is realized within the scope of the evaluation, wherein the respective frequency spectrum of the Fourier transformation of a reference voice is allocated to at least one characteristic emotional condition of the user and/or one characteristic state of health of the user in a database. Advantageously, the database of the emotional conditions and/or states of health is provided by the user's terminal and/or by a device, in particular a computing device, of a network node of the communication network, which node is involved in the voice communication connection.

Another advantageous embodiment of the invention provides that the information to be signalised is memorized in a database, wherein at least one possible emotional condition of a user and/or one possible state of health of a user is allocated to the respective information. Advantageously, the database is provided by a device, in particular a computing device, of a network node of the communication network, which node is involved in the voice communication connection.

According to the invention, the voice communication connection is advantageously a voice communication connection etsablished between the user of the terminal and another subscriber, in particular another user or a voice application realising a service.

Advantageously, the information is signalised before and/or while establishing the voice communication connection of the user and/or during the established voice communication connection.

For the technical solution of the initially mentioned problem, the present invention proposes a network node in a communication network, preferably a mobile network according to a GSM, GPRS and/or UMTS radio network standard, which node is at least partially involved in a voice communication connection and is designed and/or adapted to at least partially carry out a method according to the invention.

Advantageously, the network node comprises a device for detecting the user's voice within the scope of a voice communication connection, a device for analysing the detected voice of the user, a device for digitalising a detected voice, a device for the Fourier transformation of a digital voice signal, a database, in which the respective frequency spectrum of the Fourier transformation of a reference voice is at least allocated to one characteristic emotional condition of a user and/or to one characteristic state of health of a user, and/or a database, in which information to be signalised is memorized, wherein at least one possible emotional condition of a user and/or one possible state of health of a user is allocated to the respective information.

For the technical solution of the initially mentioned problem, the present invention further proposes a terminal to be operated in a communication network, preferably a mobile network according to a GSM, GPRS and/or UMTS radio network standard, which terminal is designed and/or adapted to at least partially carry out a method according to the invention.

Advantageously, the terminal comprises a device for detecting the user's voice within the scope of a voice communication connection, a device for analysing the detected voice of the user, a device for digitalising the detected voice, a device for the Fourier transformation of a digital voice signal and/or a database, in which the respective frequency spectrum of the Fourier transformation of a reference voice is at least allocated to one characteristic emotional condition of a user and/or to one characteristic state of health of a user.

Other details, characteristics and advantages of the invention will be explained in detail in the following by means of the exemplary embodiment represented in the figure of the drawing. Herein:

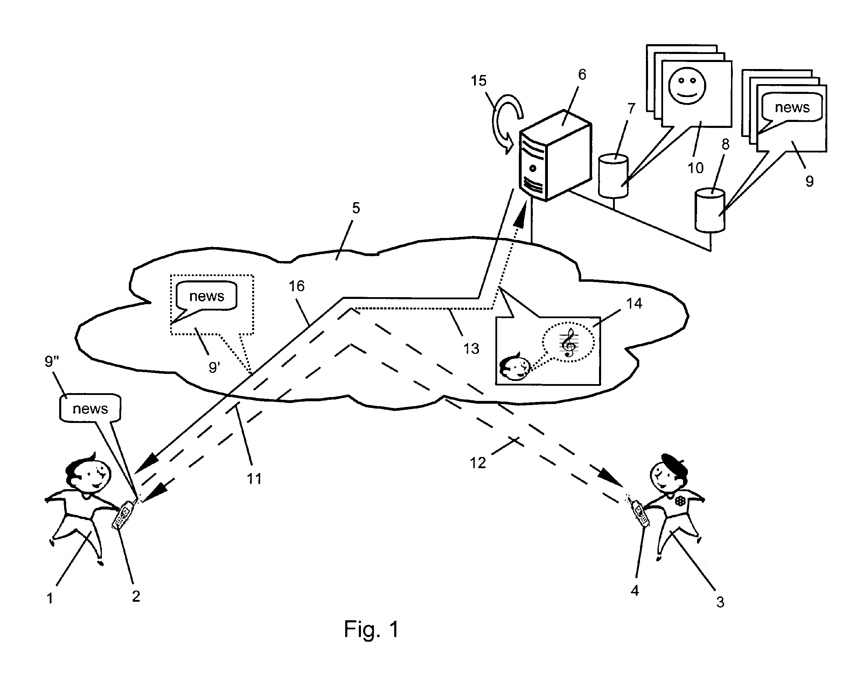

- Fig. 1: is a schematic diagram that shows an exemplary embodiment of providing information according to the invention within the scope of a voice communication connection between the user of a communication terminal and another participant of the voice communication connection.

Fig. 1 shows a principal exemplary embodiment of providing information according to the invention and in at least partially automatised way within the scope of a voice communication connection between the user 1 of a communication terminal 2 and another participant of the voice communication connection, in the present case the user 3 of a communication terminal 4.

In the present case the user 1 comprises a mobile terminal 2 in form of a mobile phone 2 that is operable in a mobile network 5 according to a GSM, GPRS and/or UMTS radio network standard. In the present case the user 3 also comprises a mobile terminal 4 in form of a mobile phone 4 that is operable in a mobile network 5 according to a GSM, GPRS and/or UMTS radio network standard. The bidirectional voice communication connection established via the the mobile network 5 between the terminal 2 of the user 1 and the terminal 4 of the user 3 is represented in fig. 1 by the dahed arrows 11 and 12 between the terminal 2 of the user 1 and the terminal 4 of the user 3. The mobile network 5 is symbolically represented in fig. 1 by a cloud. The mobile network 5 comprises different devices and/or systems forming or realising the mobile network 5, one of which is a computing unit 6 comprising databases 7 and 8, which is symbolically represented in fig. 1.

The mobile network 5 is provided with a computing unit (server) 6 which comprises reference voices or frequency spectra of reference voices in a database 7, which are respectively allocated to at least one emotional condition 10 characteristic of the reference voice and/or to at least one state of health characteristic of the reference voice, and which contains the information 9 to be signalised in a database 8, in particular service information and/or advertising information for goods and/or services, which is repsectively allocated to one possible emotional condition and/or at least one possible state of health.

Within the scope of a voice communication connection 11, 12 established via the mobile network 5 between the terminal 2 of the user 1 and the terminal 4 of the user 3, the computing unit 6 detects at least a part of the voice signals directed by the user 1 to the user 2 via the voice communication connection, by means of a network node of the mobile network 5, which node is involved in the voice communication connection 11. The detection of at least a part of the voice signals, in the present case a voice signal of a preferably predefined time period comprised between approximately 15 s and approximately 120 s, is symbolically represented in fig. 1 by the dotted arrow referenced by the reference numeral 13 and by the legend referenced by the reference numeral 14. In the present case, the voice signal of the user 1 is digitalised within the scope of the detection. The detected digitalised voice signal of the user 1 will then be analysed by the computing unit 6 with respect to phonetic parameters, preferably comprising parameters such as voice frequency, voice tone, voice ring, articulation and/or prosodic parameters. Herein, the digital voice signal of the user's 1 voice will be processed in the present case with a Fourier transformation within the scope of the analysis. Afterwards, the analysed phonetic parameters will be evaluated by the computing unit 6. In the present case, at least one comparison between the frequency spectrum of the Fourier transformation of the digital voice signal of the detected voice of the user 1 and frequency spectra of a Fourier transformation of reference voices will be realised within the scope of the evaluation, wherein the respective frequency spectrum of the Fourier transformation of a reference voice in the database 7 is allocated to at least one characteristic emotional condition and/or one state of health 10. In the database 8, at least one information 9 to be signalised, in particular service information and/or advertising information for goods and/or services that is adapted to the characteristic emotional condition and/or a state of health 10 is allocated to the characteristic emotional condition and/or state of health 10 determined by the comparison. The corresponding information 9 to be signalised will then be selected by the computing unit 6. In fig. 1, the process steps realised or carried out by the computing unit 6 in connection with the detection, analysis and evaluation are symbolically represented by the arrow referenced by the reference numeral 15. The selected information 9 to be signalised will be afterwards transmitted (the transmission is represented in fig. 1 by the arrow referenced by the reference numeral 16) by the computing unit 6 via the mobile network 5 to the terminal 2 of the user 1 (the transmitted information is symbolically represented in fig. 1 by the legend referenced by the reference numeral 9') and will be signalised to the user 1 by acoustic reproduction by means of the terminal 2 (the acoustic reproduction is symbolically represented by the legend referenced by the reference numeral 9").

The exemplary embodiments of the invention represented in the figure of the drawing and described in connection with this one only serve for explanation of the invention and are not limiting for this one.

### List of reference numerals:

- 1: user
- 2: terminal/mobile phone (user (1))
- 3: user/participant
- 4: terminal/mobile phone (user (3))
- 5: mobile network
- 6: computing unit/server
- 7: database (reference voices ↔ emotional conditions/states of health)
- 8: database (emotional condition/state of health ↔ information)
- 9: information
- 9': information (transmission (16))
- 9": information (signalisation/acoustic reproduction)
- 10: emotional condition/state of health
- 11: voice communication connection (user 1 → user 2)
- 12: voice communication connection (user 2 → user 1)
- 13: detection voice signal (voice user (1))
- 14: detection voice signal (voice user (2))
- 15: process steps in connection with the detection, analysis and evaluation
- 16: transmission of information to be signalised (9')

## Claims

1. A method for providing information (9), in particular service information and/or advertising information for goods and/or services by means of a terminal (2) to be operated in a communication network (5), wherein information is acoustically signalised by the terminal (2) within the scope of a voice communication connection,
**characterized by** the following process steps:
detection of at least a part of the voice of the user (1) of a terminal (2) within the scope of a voice communication connection (11, 12);
analysis of the detected voice of the user (1) with respect to phonetic parameters;
evaluation of the analysed phonetic parameters and
signalisation of information (9) dependent on the evaluation of the analysed phonetic parameters of the detected voice of the user (1).

2. A method according to claim 1, **characterized in that** the analysis is realized with respect to parameters such as voice frequency, voive tone, voice ring, articulation and/or prosodic parameters.

3. A method according to claim 1 or claim 2, **characterized in that** the analysed phonetic parameters are evaluated with respect to the user's (1) emotional condition (10) and/or the user's (1) state of health (10).

4. A method according to one of the claims 1 through 3, **characterized in that** the information to be signalised is adapted to the user's (1) emotional condition (10) and/or the user's (1) state of health (10).

5. A method according to one of the claims 1 through 4, **characterized in that** the user's (1) voice is detected within the scope of the voice communication connection (11, 12) by means of the user's (1) terminal (2) and/or by means of a device (6) of a network node of the communication network (5), which node is involved in the voice communication connection (11, 12).

6. A method according to one of the claims 1 through 5, **characterized in that** the analysis of the detected user's (1) voice is realized by means of the user's (1) terminal (2) and/or by means of a device (6) of a network node of the communication network (5), which node is involved in the voice communication connection (11, 12).

7. A method according to one of the claims 1 through 6, **characterized in that** the user's (1) voice is digitalised in the context of the detection, the digital voice signal is processed with a Fourier transformation within the scope of the analysis and at least one comparison between the frequency spectrum of the Fourier transformation of the digital voice signal of the detected voive of the user (1) and frequency spectra of a Fourier transformation of reference voices is realized within the scope of the evaluation, wherein the respective frequency spectrum of the Fourier transformation of a reference voice is allocated to at least one characteristic emotional condition of a user and/or one characteristic state of health of a user in a database (7).

8. A method according to claim 7, **characterized in that** the database (7) is provided by the user's terminal and/or by a device (6) of a network node of the communication network (5), which node is involved in the voice communication connection (11, 12).

9. A method according to one of the claims 1 through 8, **characterized in that** the information to be signalised (9) is memorized in a database (8), wherein at least one possible emotional condition (10) of a user (1) and/or one possible state of health (10) of a user (1) is allocated to the respective information (9).

10. A method according to claim 9, **characterized in that** the database (8) is provided by a device (6) of a network node of the communication network (5), which node is involved in the voice communication connection (11, 12).

11. A method according to one of the claims 1 through 10, **characterized in that** the voice communication connection (11, 12) is a voice communication connection (11, 12) etsablished between the user (1) of the terminal (2) and another subscriber (3, 4).

12. A method according to one of the claims 1 through 11, **characterized in that** the information (9) is signalised before and/or while establishing the voice communication connection (11, 12) of the user (1) and/or during the established voice communication connection (11, 12).

13. A network node in a communication network (5), preferably a mobile network (5) according to a GSM, GPRS and/or UMTS radio network standard, which node is at least partially involved in a voice communication connection (11, 12),
**characterized in that** the node is designed and/or adapted to at least partially carry out a method according to one of the claims 1 through 12.

14. A network node according to claim 13, **characterized by** a device for detecting the user's (1) voice within the scope of a voice communication connection (11, 12).

15. A network node according to claim 13 or claim 14, **characterized by** a device for analysing the detected voice of the user (1).

16. A network node according to one of the claims 13 through 15, **characterized by** a device for digitalising a detected voice.

17. A network node according to one of the claims 13 through 16, **characterized by** a device for the Fourier transformation of a digital voice signal.

18. A network node according to one of the claims 13 through 17, **characterized by** a database (7), in which the respective frequency spectrum of the Fourier transformation of a reference voice is at least allocated to one characteristic emotional condition (10) of a user (1) and/or to one characteristic state of health (10) of a user (1).

19. A network node according to one of the claims 13 through 18, **characterized by** a database (8), in which information to be signalised (9) is memorized, wherein at least one possible emotional condition (10) of a user (1) and/or one possible state of health (10) of a user (1) is allocated to the respective information (9).

20. A terminal (2) to be operated in a communication network (5), preferably a mobile network (5) according to a GSM, GPRS and/or UMTS radio network standard, **characterized in that** the terminal is designed and/or adapted to at least partially carry out a method according to one of the claims 1 through 12.

21. A terminal (2) according to claim 20, **characterized by** a device for detecting the user's (1) voice within the scope of a voice communication connection (11, 12).

22. A terminal (2) according claim 20 or claim 21, **characterized by** a device for analysing the detected voice of the user (1).

23. A terminal (2) according to one of the claims 20 through 22, **characterized by** a device for digitalising the detected voice.

24. A terminal (2) according to one of the claims 20 through 23, **characterized by** a device for the Fourier transformation of a digital voice signal.

25. A terminal (2) according to one of the claims 20 through 24, **characterized by** a database (7), in which the respective frequency spectrum of the Fourier transformation of a reference voice is at least allocated to one characteristic emotional condition (10) of a user (1) and/or to one characteristic state of health (10) of a user (1).
